# EUROPÄISCHE PATENTSCHRIFT

(11) **EP 1 234 239 B1**
(45) Veröffentlichungstag und Bekanntmachung des Hinweises auf die Patenterteilung: **06.01.2010**
(21) Anmeldenummer: 00983200.7
(22) Anmeldetag: 30.11.2000
(51) Int. Cl.: G06F 21/00

(54) **MIKROPROZESSORANORDNUNG MIT VERSCHLÜSSELUNG**
MICROPROCESSOR ARRANGEMENT HAVING AN ENCODING FUNCTION
DISPOSITIF MICROPROCESSEUR A FONCTION DE CHIFFREMENT

(30) Priorität: 02.12.1999 EP 99124134
(43) Veröffentlichungstag der Anmeldung: 28.08.2002
(73) Patentinhaber: Infineon Technologies AG, 85579 Neubiberg (DE)
(72) Erfinder: GAMMEL, Berndt, 85570 Marktschwaben (DE); KNIFFLER, Oliver, D-81737 München (DE); SEDLAK, Holger, 85658 Egmating (DE)
(86) Internationale Anmeldenummer: PCT/EP2000/012065
(87) Internationale Veröffentlichungsnummer: WO 2001/040950

(56) Entgegenhaltungen:
- EP-A- 0 887 723
- US-A- 5 943 421
- B.SCHNEIER,: 'Applied Cryptography, John Wiley & Sons Inc., 2nd Ed. (1996); Kapitel 1 (Seiten 1-18), 8 (Seiten 169-187), 9 (Seiten 189-211) und 16 (Seiten 369-395) sowie Punkte 2.8 (Seiten 44-46) und 24.13 (Seite 587)',

## Beschreibung

Die Erfindung betrifft eine Datenverarbeitungsanordnung gemäß dem Oberbegriff des Anspruchs 1, wie aus der GB-A-2099195 bekannt.

Datenverabeitungs-bezieherungsweise Mikroprozessoranordnungen, bei denen der über Datenbusse laufende Datenverkehr kryptographisch verschlüsselt wird, werden in sicherheitskritischen Anwendungen eingesetzt. Beispielsweise dienen solche Mikroprozessoranordnungen als Steuerungsschaltungen für mobile Datenträgerkarten, sogenannte Chipkarten. Im Datenspeicher der Mikroprozessoranordnungen werden personalisierte Daten, Geldwerte oder Zugangsberechtigungen gespeichert, die von einem Lesegerät abgefragt werden, welches anschließend eine vor unberechtigten Zugriffen geschützte Funktionseinheit freischaltet.

Da der Datenverkehr innerhalb der Mikroprozessoranordnung vertrauliche Daten umfaßt, auf welche kein unberechtigter Zugriff möglich sein darf, sind geeignete Schutzmaßnahmen erforderlich. Ein unberechtigtes Auslesen des Datenspeichers der Anordnung oder Abhören des anordnungsinternen Datenverkehrs könnte mittels Probing erfolgen, bei dem dünne Nadeln auf entsprechende Schaltungsteile und Leitungen gesetzt werden, um den verarbeiteten Signalfluß im Betrieb abzugreifen. Das Treiben von Busleitungen erfordert aufgrund der relativ großen parasitären Kapazitäten erhöhten Strombedarf der Schaltungen. Ein Buszugriff ist: von außen durch ein charakteristisches Stromprofil sichtbar. Daraus können Rückschlüsse auf interne Arbeitsschritte der Schaltung getroffen werden; es wäre unter Umständen sogar möglich, den Schlüssel einer kryptographischen Einheit zu ermitteln.

Schutzmaßnahmen gegen unberechtigtes Auslesen des Inhalts von Datenspeichern in einem Mikrocontroller für eine Chipkarte sind in der DE 196 42 560 A1 beschrieben. Im Datenspeicher sind sicherheitsrelevante Daten verschlüsselt abgelegt. In den Datenpfad zwischen Speicher und CPU ist eine Entschlüsselungseinrichtung geschaltet, so daß in der CPU die entschlüsselten originalen Daten verarbeitet werden können. Beim Zurückschreiben der Daten in den Speicher werden die Daten wiederum verschlüsselt. In einer Ausführungsvariante werden die End- und Verschlüsselungsverfahren zweistufig abgearbeitet. Dementsprechend ist je eine Ver- und Entschlüsselungsteileinheit auf Seite des Speichers und der jeweiligen Periphereinheiten sowie auf Seite der CPU angeordnet.

Problematisch ist, daß der Datenverkehr auf dem Bus je nach Ausführungsvariante entweder vollständig entschlüsselt oder teilentschlüsselt vorliegt. Durch Probing könnte der über den Bus laufende Datenverkehr relativ einfach abgehört werden. Es wären zusätzliche, z.B. mechanische Maßnahmen erforderlich, um effektiven Schutz vor unberechtigtem Abgriff zu bewirken.

Dokument EP 0 887 723 A2 beschreibt ein Computersystem mit einer CPU, die über ein Speicherelement an einen Bus gekoppelt ist. Es ist ein weiterer Funktionsblock vorgesehen, der ebenfalls an den Bus gekoppelt ist. Die von der CPU zum Funktionsblock über den Bus übertragenen Daten werden in der CPU verschlüsselt und in der Funktionseinheit entschlüsselt. Die Auswahl des verwendeten Verschlüsselungs- beziehungsweise Entschlüsselungsalgorithmus wird von der CPU aus einem gegebenen Satz von Algorithmen ausgewählt und dem Funktionsblock signalisiert. Ein gegebenenfalls benötigter Schlüssel wird ebenfalls von der CPU generiert und der Funktionseinheit übertragen.

Im Dokument US-A-5,943,421 ist ein System bestehend aus einer CPU und einem Speicher beschrieben, die über einen Bus verbunden sind. Die Daten werden verschlüsselt über den Bus übertragen.

Im Dokument B. Schneier, "Applied Cryptography, Second Edition", John Wiley & Sons Inc., 1996 sind verschiedene Verschlüsselungsalgorithmen genannt. Des Weiteren werden Kriterien für die Auswahl eines geeigneten Schlüssels und dessen Übermittlung zwischen Sender und Empfänger beschrieben, sowie die Vervendung von rückgekoppelten Schieberegistern als Zufallzahlengeneratoren

Es stellt sich daher die Aufgabe, eine Datenverarbeitungsanordnung mit Busverschlüsselung vorzusehen, die mit geringen Schaltungsaufwand realisiert und in Vorrichtungen mit kleinen Abmessungen integriert werden kann.

Gemäß der Erfindung wird diese Aufgabe durch eine Datenverarbeitungsanordnung mit der Merkmalen des Anspruchs 1 gelöst.

Bei der Erfindung wird der von einer Funktionseinheit der Mikroprozessoranordnung auf den Datenbus ausgegebene Datenverkehr verschlüsselt und am Eingang zur empfangenden Einheit wieder entschlüsselt. Der Ver- und Entschlüsselungsbetrieb wird von einem Zufallsgenerator gesteuert, so daß der jeweilige Betriebszustand des Ver-/Entschlüsselungsverfahrens nicht deterministisch vorhersagbar ist. Die Sicherheit des über den Datenbus abgewickelten Datenverkehrs wird dadurch erhöht. Daher sind ansonsten zusätzlich notwendige mechanische Maßnahmen, welche die Busleitungen vor Nadelangriffen bewahren, nicht mehr erforderlich. Durch die Zufallssteuerung des Ver-/Entschlüsselungsverfahrens wird ein entsprechend zufälliges Stromprofil bewirkt, so daß auf diesen Wege kein Abhören des Datenverkehrs über den Bus möglich ist.

Prinzipiell ist die Erfindung bei jedem Mikroprozessorsystem, bei dem die zentrale Verarbeitungseinheit (Central Processing Unit - CPU) mit peripheren Einheiten einschließlich Speicher über einen Bus Daten und Adressen austauscht, anwendbar. Die Zufallszahlen werden, zur Steuerung der Ver-/Entschlüsselung taktsynchron den jeweiligen Einheiten zugeführt. Hierzu ist eine Taktleitung vorgesehen, die alle Ver-/Entschlüsselungseinheiten miteinander verbindet. Außerdem sind diese Einheiten durch eine Leitung, auf welcher die Zufallszahlen weitergeleitet werden, miteinander verbunden. Zur Erhöhung der Sicherheit empfiehlt es sich, beide letztgenannten Leitungen mittels mechanischer Abschirmungsmaßnahmen vor Nadelangriffen zu schützen. Ein entsprechender Schutz für die Vielzahl der übrigen Datenleitungen des Busses entfällt jedoch.

Es ist auch möglich, die Zufallswerte für den Schlüssel über den Bus und eine Steuerleitung in die kryptographischen Einheiten zu übertragen. Die gesonderte Leitung 5 ist dann nicht mehr erforderlich. Damit lassen sich nicht nur der Datenbus, sondern auch Steuersignale, sogenannte Busstates, verschlüsselt übertragen.

Eine Ver-/Entschlüsselungseinheit enthält ein Schieberegister mit Rückkoppelung, welches vom gemeinsamen Taktsignal und der seriell eingespeisten Zufallszahl gesteuert wird. Das vom Schieberegister ausgangsseitig bereitgestellte Datenwort wird mit dem auf den Bus auszugebenden bzw. vom Bus empfangenen Datenwort logisch verknüpft, beispielsweise über eine Exklusiv-ODER-Verknüpfung. Die Rückkopplung des Schieberegisters ist vorzugweise linear.

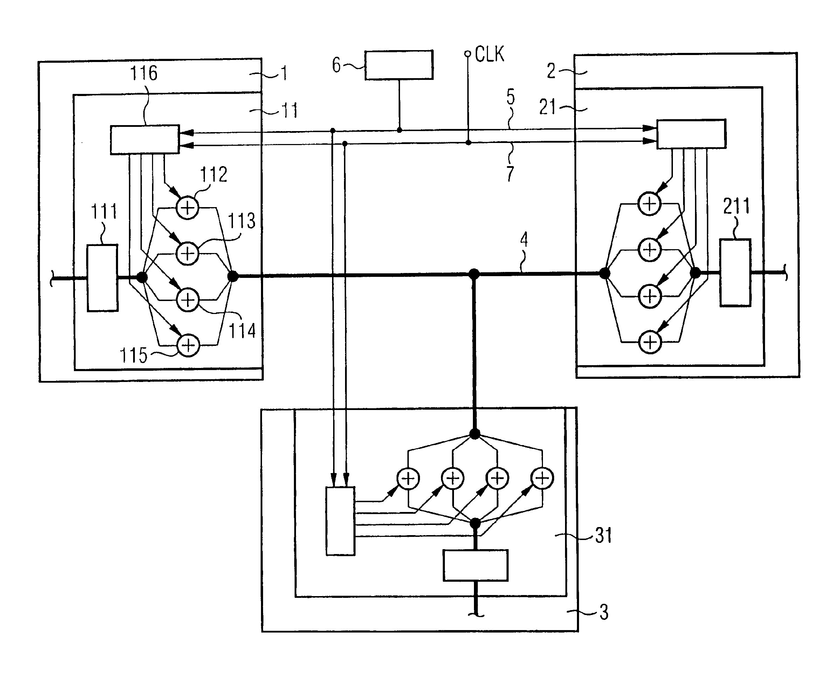

Nachfolgend wird die Erfindung anhand des in der Zeichnung dargestellten Ausführungsbeispiels näher erläutert. Die Figur zeigt eine schematische Darstellung einer CPU, eines Speichers und einer weiteren Periphereinheit, die monolithisch auf einem Mikrocontroller integriert sind.

Der in der Figur gezeigte Mikrocontroller umfaßt eine zentrale Verarbeitungseinheit oder CPU 1, einen Speicher 2 sowie eine periphere Einheit 3. Die periphere Einheit 3 kann beispielsweise ein Ein-/Ausgabeschaltungsblock sein. Sämtliche Komponenten des Mikrocontrollers sind auf einem einzigen Siliziumchip integriert. Die CPU 1 übernimmt die Datensteuerung und Rechenfunktionen, die Speichereinheit 2 enthält flüchtig oder nicht flüchtig gespeicherte Daten und die periphere Einheit 3 dient der jeweiligen ihr zugeordneten dedizierten Funktion. Im allgemeinen enthält der Mikrocontroller noch weitere Funktionseinheiten. Der Datenaustausch zwischen den genannten Einheiten erfolgt über einen Datenbus 4. Der Datenbus umfaßt eine Vielzahl von Leitungen, auf welchen die Daten parallel übertragen werden. Außerdem enthält der Bus entsprechende Steuerungsleitungen zur Steuerung der Datenübertragung. Am zum Datenbus hin gerichteten Eingang und Ausgang der Einheiten 1, 2, 3 ist eine kryptographische Einheit 11, 21, 31 angeordnet. Der über die Datenbusleitungen an die jeweilige Einheit eingegebene oder ausgegebene Datenstrom wird durch die zugeordnete kryptographische Einheit entschlüsselt bzw. verschlüsselt.

Beispielsweise fordert die CPU 1 ein Datenwort aus dem Speicher 2 an. Das Datenwort wird aus den entsprechenden Speicherzellen des Speichers 2 ausgelesen und in einem Register 211 zwischengespeichert. Durch die internen Schaltungen der kryptographischen Einheit 21 wird das Datenwort verschlüsselt und auf den Bus 4 ausgegeben. Die kryptographische Einheit 11 der CPU 1 empfängt dieses Datenwort, um es zu entschlüsseln und im Register 111 zwischenzuspeichern. Während der Übertragung des Datenworts auf dem Bus 4 vom Speicher 2 zur CPU 1 liegt nur das verschlüsselte Datum vor. Die Verschlüsselung und die Entschlüsselung in den Einheiten 21 bzw. 11 wird in Abhängigkeit von einer Zufallszahl ausgeführt, welche von einem Zufallsgenerator 6 bereitgestellt wird, dessen Ausgang über eine Leitung 5 mit den Einheiten 21, 11 verbunden ist. Die Einspeisung der Zufallszahl erfolgt in beiden Einheiten 21, 11 taktsynchron mittels eines über eine Leitung 7 in beide Einrichtungen 21, 11 eingespeisten Takts CLK. Der Zufallsgenerator 6 erzeugt eine (pseudo-) zufällige Folge von Bits, welche taktsynchron mit dem Takt CLK den kryptographischen Einheiten 21, 11 zur Verfügung gestellt werden.

Durch die zufallsabhängige Steuerung der Ver- bzw. Entschlüsselung wird die Datensicherheit des über den Bus 4 übertragenen Datenwerts vor unberechtigtem Abgriff erhöht. Die Synchronsteuerung gewährleistet, daß Ver- und Entschlüsselungsschritte bei der sendenden bzw. empfangenden Einheit im gleichen Zeitintervall zueinander komplementär sind. Wegen der Zufälligkeit der Verschlüsselung erscheint auf dem Bus trotz sich eventuell wiederholenden zu übertragenden Daten ein unterschiedliches Bitmuster. Das Stromprofil des Chips, welches wegen der relativ hohen umzuladenden kapazitiven Lasten des Busses von außen relativ gut meßbar ist, erscheint im Zeitverlauf unkorreliert und zufällig. Das Stromprofil kann bei einem Ausleseversuch daher nicht verwendet werden, um etwaige charakteristische Schaltzustände des Mikrocontrollers zu erkennen.

Um die Sicherheit weiter zu erhöhen, genügt es, nur noch die Leitungen 5 und 7 für die Bereitstellung der Zufallszahlen bzw. des Ver-/Entschlüsselungstaktes vor einem Nadelangriff oder Probing zu schützen. Hierzu können herkömmliche bekannte Maßnahmen angewandt werden. Beispielsweise werden die Leitungen mit einer zusätzlichen Schicht überdeckt, bei deren Entfernung die Leitungen zerstört und unbrauchbar werden.

Alle drei dargestellten Ver-/Entschlüsselungseinheiten 11, 21, 31 sind entsprechend gleichartig aufgebaut. Exemplarisch wird die Einheit 11 näher erläutert. Auf Seite der CPU 1 dient das Register 111 zum Zwischenspeichern des von der CPU gerade zu empfangenden oder auszugeberiden Datenworts. Auf Seite des Anschlusses an den Datenbus wird auf jede der Datenleitungen des Busses eine logische Verknüpfung angewandt. Im gezeigten Beispiel sind die logischen Verknüpfungen Exklusiv-ODER-Verknüpfungen 112, 113, 114, 115. Jedes der Exklusiv-ODER-Gatter ist mit einem der Eingänge sowie dem Ausgang in eine der Leitungen des Datenbusses geschaltet; der andere der Eingänge ist mit je einem Ausgang eines Schieberegisters 116 verbunden, welches beilspielsweise linear rückgekoppelt ist. Das Schieberegister 116 ist eingangsseitig mit der Taktleitung 7 und der die Zufallszahlen führenden Leitung 5 beschaltet. Die vom Zufallsgenerator 6 erzeugte Zufallszahl wird über die Leitung 5 seriell dem rückgekoppelten Schieberegister 116 zugeführt, wobei die Taktsteuerung durch den Takt CLK erfolgt. Die Rückkopplung des Schieberegisters 116 sorgt dafür, daß an dessen Ausgangsanschlüssen in jedem Zeittakt ein anderes Datenwort zur Verfügung steht, welches über die Exklusiv-ODER-Gatter 112, ..., 115 mit dem jeweils auf den Bus 4 auszugebenden bzw. vom Bus 4 zu empfangenden Datenwort logisch verknüpft wird. Beim Start werden die Schieberegister mit dem gleichen Wert initialisiert. Da die anderen kryptographischen Einheiten 21, 31 gleichartig aufgebaut und auch in ihren Außenanschlüssen entsprechend beschaltet sind, werden die über den Bus 4 übertragenen Datenworte am Sende- und am Empfangsort verschlüsselt bzw. entsprechend komplementär entschlüsselt. Die Ver- bzw. Entschlüsselung sind symmetrisch zueinander. Prinzipiell genügt es, wenn das Schieberegister 116 nicht rückgekoppelt ist. Durch die Rückkopplung wird der Schutz erhöht. Zur Rückkopplung eignet sich eine lineare Rückkopplung basierend auf einem primitiven Polynom. Je nach Parallelität wird mit entsprechend vielen Bits aus dem Schieberegister verschlüsselt. Auf Sende- und Empfangsseite erfolgt die Ver-/Entschlüsselung durch die gleiche Zufallszahl taktsynchron. Die übertragung spielt wegen der symmetrischen Verschlüsselung keine Rolle.

Der Schaltungsaufwand zur Bereitstellung der Zufallszahlen und des Takts sowie der Schaltungsaufwand für das linear rückgekoppelte Schieberegister, das Ein-/Ausgaberegister sowie die Exklusiv-ODER-Gatter ist vertretbar. Die Sicherheit gegenüber einem unberechtigten Abhören der über den Bus übertragenen Datenwerte sowie einer unberechtigten Messung des Stromprofils ist aber gemessen am zusätzlichen Aufwand wesentlich erhöht.

## Patentansprüche

1. Dateverarbeitungsanordnung, die umfasst:
- eine zentrale Verarbeitungseinheit (1) und mindestens eine periphere Einheit (2, 3), die über einen Bus (4) miteinander verbunden sind,
- eine erste kryptographische Einheit (21, 31), die in der peripheren Einheit (2, 3) angeordnet ist und an den Bus (4) angeschlossen ist,
- eine zweite-kryptographische Einheit (11), die in der zentralen Verarbeitungseinheit (1) angeordnet ist und an den Bus (4) angeschlossen ist, wobei
- Datenverkehr verschlüsselt über den Bus übertragen wird, indem der Datenverkehr von der sendenden Einheit verschlüsselt und von der empfangenden Einheit entschlüsselt wird,
- einen Zufallsgenerator (6) zur Erzeugung einer Folge von Zufallswerten, der mit der ersten und der zweiten kryptographischen Einheit (21, 31; 11) zur Einspeisung der Zufallswerte gekoppelt ist, wobei
- der kryptographische Betrieb der ersten und zweiten kryptographischen Einheiten (21, 31; 11) in Abhängigkeit von den vom Zufallsgenerator (6) erzeugten Zufalls-werten steuerbar ist,
**gekennzeichnet dadurch,**
**dass** die Datenverarbeitungsanordnung eine monolitisch integrierte Mikroprozessoranordnung in einem mobilen Datenträger ist, dass jede der kryptographischen Einheiten (11, 21, 31) umfasst:
- ein rückgekoppeltes Schieberegister (116), dem die vom Zufallsgenerator (6) erzeugten Zufalls-werte zuführbar sind, und
- eine Anzahl von Datensignalpfaden mit je einem logischen Verknüpfungselement (112, 113, 114, 115), welches eingangsseitig mit dem Signalpfad und einem Ausgang des rückgekoppelten Schieberegisters (116) verbunden ist und ausgangsseitig mit einem der signalpfade, und
**dass** jede der kryptographischen Einheiten (11,21,31)
durch einen Anschluss zur Einspeisung eines Taktsignals (CLK) taktsynchron steuerbar ist.

2. Datenverabeitungs-anordnung nach Anspruche 1, **dadurch gekennzeichnet, dass** das Schieberegister (116) linear rückgekoppelt ist.

3. Datenverarbeitungs-anordnung nach einem der Ansprüche 1 oder 2, **dadurch gekennzeichnet, dass** die periphere Einheit (2) ein Speicherzellenfeld umfasst.

## Claims

1. Data processing arrangement which comprises:
- a central processing unit (1) and at least one peripheral unit (2, 3) which are connected to one another by means of a bus (4),
- a first cryptographic unit (21, 31), which is arranged in the peripheral unit (2, 3) and is connected to the bus (4),
- a second cryptographic unit (11), which is arranged in the central processing unit (1) and is connected to the bus (4), wherein
- data traffic is transferred encrypted via the bus by virtue of the data traffic being encrypted by the sending unit and decrypted by the receiving unit,
- a random number generator (6) for producing a succession of random values, which is coupled to the first and to the second cryptographic unit (21, 31; 11) for the purpose of supplying the random values, wherein
- the cryptographic operation of the first and second cryptographic units (21, 31; 11) can be controlled on the basis of the random values produced by the random number generator (6),
**characterized**
**in that** the data processing arrangement is a
monolithically integrated microprocessor arrangement in a mobile data carrier, in that each of the cryptographic units (11, 21, 31) comprises:
- a shift register with feedback (116), to which the random values produced by the random number generator (6) can be supplied, and
- a number of data signal paths having a respective combinational logic element (112, 113, 114, 115) whose input side is connected to the signal path and to an output of the shift register with feedback (116), and whose output side is connected to one of the signal paths, and
**in that** each of the cryptographic units (11, 21, 31) is controlled in clock sync by a connection for supplying a clock signal (CLK)

2. Data processing arrangement as claimed in Claim 1,
**characterized**
**in that** the shift register (116) has linear feedback.

3. Data processing arrangement as claimed in one of claims 1 or 2,
**characterized**
**in that** the peripheral unit (2) comprises a memory cell array.

## Revendications

1. Dispositif de traitement de données, qui comprend :
- une unité (1) centrale de traitement et au moins une unité (2, 3) périphérique, qui sont reliées l'une à l'autre par un bus (4),
- une première unité (21, 31) cryptographique qui est disposée dans l'unité (2, 3) périphérique et qui est raccordée au bus (4),
- une deuxième unité (11) cryptographique qui est disposée dans l'unité (1) centrale de traitement et qui est raccordée au bus (4), dans lequel
- un trafic de données est transmis de manière chiffrée par l'intermédiaire du bus, par le fait que le trafic de données est chiffré par l'unité émettrice et est déchiffré par l'unité réceptrice,
- un générateur (6) de valeurs aléatoires, pour la production d'une suite de valeurs aléatoires qui, pour l'injection des valeurs aléatoires, est couplé à la première et à la deuxième unité (21, 31, 11) cryptographiques, dans lequel
- le fonctionnement cryptographique des première et deuxième unités (21, 31, 11) cryptographiques peut être commandé en fonction des valeurs aléatoires produites par le générateur (6) de valeurs aléatoires,
**caractérisé en ce que**,
le dispositif de traitement de données est un dispositif microprocesseur intégré monolithiquement dans un support de données mobile,
**en ce que** chacune des unités (11, 21, 31) cryptographiques comprend :
- un registre (116) à décalage à réaction, auquel les valeurs aléatoires produites par le générateur (6) de valeurs aléatoires peuvent être envoyées, et
- un certain nombre de trajets de signal de données ayant respectivement un élément (112, 113, 114, 115) de combinaison logique, qui est relié du côté de l'entrée au trajet du signal et à une sortie de registre (116) à décalage à réaction et du côté de la sortie à l'un des trajets du signal, et
**en ce que** chaque unité (11, 21, 31) cryptographique peut être commandée en synchronisme par une borne pour l'injection d'un signal (CLK) d'horloge.

2. Dispositif de traitement de données suivant la revendication 1, **caractérisé en ce que** le registre (116) à décalage est à réaction linéaire.

3. Dispositif de traitement de données suivant l'une des revendications 1 ou 2, **caractérisé en ce que** l'unité (2) périphérique comprend un champ de cellules de mémoire.
